# EUROPÄISCHE PATENTSCHRIFT

(11) **EP 2 479 016 B1**
(45) Veröffentlichungstag und Bekanntmachung des Hinweises auf die Patenterteilung: **20.07.2022**
(21) Anmeldenummer: 12000256.3
(22) Anmeldetag: 17.01.2012
(51) Int. Cl.: B29C 45/67, B30B 15/00

(54) **Vertikale Zwei-Platten-Schliesseinheit**
Vertical two platens locking unit
Unité de fermeture verticale à deux plateaux

(30) Priorität: 19.01.2011 AT 772011
(43) Veröffentlichungstag der Anmeldung: 25.07.2012
(73) Patentinhaber: ENGEL AUSTRIA GmbH, 4311 Schwertberg (AT)
(72) Erfinder: Zeidlhofer, Herbert, 3350 Haag (AT); Lohnecker, Anton, 3355 Ertl (AT)
(74) Vertreter: Torggler & Hofmann Patentanwälte - Innsbruck

(56) Entgegenhaltungen:
- EP-A1- 0 228 912
- EP-A1- 0 567 870
- DE-A1- 3 808 344
- DE-A1- 4 342 565
- JP-A- H1 119 993
- JP-A- H08 216 213
- US-A- 3 606 641

## Beschreibung

Die vorliegende Erfindung betrifft eine vertikale Zwei-Platten-Schließeinheit für eine Spritzgießmaschine sowie eine Spritzgießmaschine mit einer derartigen Schließeinheit.

Vertikale Schließeinheiten für Spritzgießmaschinen sind bereits seit längerem bekannt. Meistens handelt es sich dabei um Drei-Platten-Schließeinheiten, bei welchen eine verfahrbare Platte zwischen zwei stationären Platten vertikal bewegbar ist, wobei zwischen einer der beiden stationären Platten und der verfahrbaren Platte ein Verfahrmechanismus zum Verfahren der Platte und/oder Aufbringen einer Schließkraft angeordnet ist (siehe zum Beispiel US 2003/0108636 A1 oder US 4,904,173).

Aus der DE 10 2005 017 878 B3 geht hingegen eine vertikale Zwei-Platten-Schließeinheit hervor, die eine stationäre Basisplatte und eine in vertikaler Richtung relativ zur Basisplatte verfahrbare Platte aufweist. Es sind Holme vorgesehen, welche die Basisplatte und die verfahrbare Platte durchsetzen. Durch einen hydraulischen Verfahrmechanismus kann die verfahrbare Platte im Eilhub bewegt werden und es kann außerdem die erforderliche Schließkraft aufgebaut werden. Diese vertikale Zwei-Platten-Schließeinheit hat gegenüber den diskutierten vertikalen Drei-Platten-Schließeinheiten den Vorteil, dass das Gewicht einer Platte eingespart werden kann.

Es sind auch bereits horizontale Zwei-Platten-Schließeinheiten bekannt, bei denen eine stationäre Basisplatte und eine in horizontaler Richtung relativ zur Basisplatte verfahrbare Platte gemeinsam auf einem Maschinenständer abgestützt sind. Es können Holme vorgesehen sein, welche die Basisplatte und die verfahrbare Platte durchsetzen. Über eine Verriegelungsvorrichtung können die Holme relativ zur verfahrbaren Platte verriegelt werden. Über Druckkissen können die Holme zum Aufbau einer Schließkraft unter Zugspannung gesetzt werden. Derartige horizontale Zwei-Platten-Schließeinheiten kommen bei sogenannten DUO-Spritzgießmaschinen der Anmelderin zum Einsatz. Zum Beispiel geht aus der EP 2 199 056 A1 eine elektrische Variante (E-DUO) hervor.

Nun wäre es manchmal vor allem aus Platzgründen vorteilhaft, Schließeinheiten nach dem Prinzip der horizontalen DUO oder E-DUO Maschine zur Verfügung zu haben, welche sich in vertikaler Richtung erstrecken, wie dies an sich bei den vertikalen Zwei-Platten- und Drei-Platten-Schließeinheiten bekannt ist. Eine naheliegende Lösung wäre es, die horizontalen DUO-Schließeinheiten in vertikaler Richtung auszurichten. Dies würde an sich auch funktionieren, hätte aber den Nachteil, dass beispielsweise gegenüber der DE 10 2005 017 878 B3 der nunmehr vertikal ausgerichtete Maschinenständer zusätzlich zu verbauen ist, wenn man beim Konzept der bei den horizontalen Schließeinheiten vorgesehenen Druckkissen zum Aufbau der Schließkraft bleiben will.

Aus der DE 2028292 geht eine vertikale Zwei-Platten-Schließeinheit mit den Merkmalen des Oberbegriffes des Anspruchs 1 hervor. Nachteilig bei dieser Schließeinheit ist die Tatsache, dass im Bereich der Basisplatte ein sehr großer Platzbedarf besteht, da die Holme im Ausmaß der jeweiligen vertikalen Erstreckung der eingespannten Form (Formhöhe) nach unten über die Basisplatte vorragen.

Weitere aus dem Stand der Technik bekannte Ausführungsformen gehen aus der US 3 606 641 A1, der JP H11 19993 A, der DE 43 42 565 A1, der EP 0 567 870 A1, der EP 0 228 912 A1, der DE 38 08 344 A1 und der JP H08 216213 A hervor.

Aufgabe der Erfindung ist es, eine vertikale Zwei-Platten-Schließeinheit zur Verfügung zu stellen, welche es ermöglicht, weiterhin über Druckkissen die Holme zum Aufbau der Schließkraft unter Zugspannung zu setzen, ohne jedoch das zusätzliche Material für einen vertikal ausgerichteten Maschinenständer verbauen zu müssen, wobei die Schließeinheit ausgehend von der Basisplatte einen geringeren Platzbedarf nach unten haben soll, als der gattungsgemäße Stand der Technik.

Diese Aufgabe wird durch eine vertikale Zwei-Platten-Schließeinheit mit den Merkmalen des Anspruchs 1 gelöst.

Dadurch, dass die Holme sowohl in der Basisplatte als auch in der verfahrbaren Platte geführt und relativ zu diesen bewegbar sind, können weiterhin Druckkissen eingesetzt werden, durch welche die Holme zum Aufbau einer Schließkraft unter Zugspannung setzbar sind. Dadurch, dass die Holme die verfahrbare Platte führen, kann auf einen zusätzlichen vertikalen Maschinenständer verzichtet werden. Durch die Anordnung der Verriegelungsvorrichtung an der verfahrbaren Platte verringert sich der Platzbedarf ausgehend von Basisplatte nach unten hin.

Weitere vorteilhafte Ausführungsformen der Erfindung sind in den abhängigen Ansprüchen definiert.

Schutz wird auch begehrt für eine Spritzgießmaschine mit wenigstens einer Plastifiziereinheit für Kunststoff, wenigstens einer Einspritzeinheit zum Einspritzen von plastifiziertem Kunststoff in eine Form und wenigstens einer erfindungsgemäßen vertikalen Zwei-Platten-Schließeinheit.

Weitere Vorteile und Einzelheiten der Erfindung ergeben sich anhand der Figuren sowie der dazugehörigen Figurenbeschreibung. Es versteht sich dabei von selbst, dass die in den Figuren als Kombination gezeigten Maßnahmen auch unabhängig voneinander oder in Teilkombinationen eingesetzt werden können. Es zeigen:
- Fig. 1: eine perspektivische Ansicht einer erfindungsgemäßen vertikalen Zwei-Platten-Schließeinheit mit seitlich angeordneter Einspritzeinheit,
- Fig. 2: einen Schnitt durch einen der beiden vertikalen Mittelebenen der in Fig. 1 dargestellten Schließeinheit,
- Fig. 3: Details zur Fig. 2.
- Fig. 4: ein Hydraulikschema zu einer Eilhubvorrichtung und
- Fig. 5: ein Hydraulikschema zu den Druckkissen.

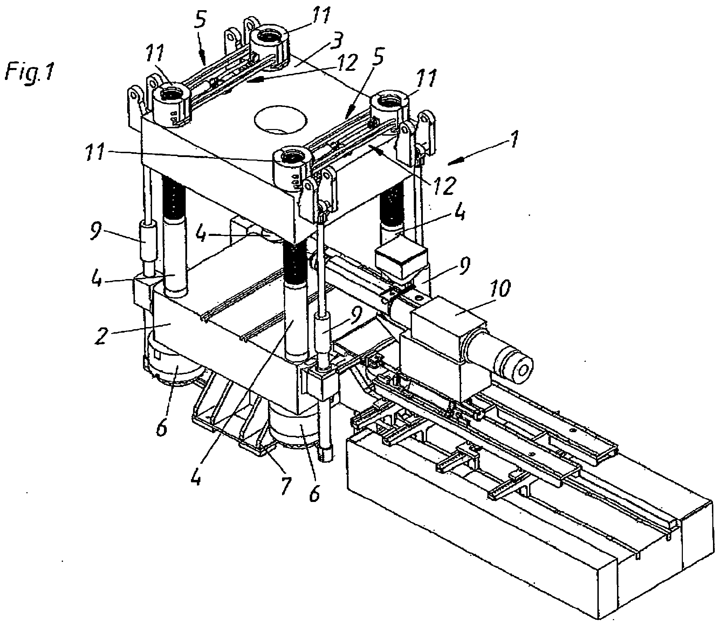

Oberhalb der stationären Basisplatte 2 ist in Fig. 1 die relativ zur Basisplatte 2 verfahrbare Platte 3 erkennbar. An der stationären Basisplatte 2 bzw. der verfahrbaren Platte 3 können im gezeigten Ausführungsbeispiel jeweils wenigstens eine Formhälfte (nicht gezeigt) befestigt werden. Die stationäre Basisplatte 2 ist auf einem Sockel 7 angeordnet, der eine derartige Höhe aufweist, dass die an der Basisplatte 2 angeordneten Druckkissen 6 (in Fig. 1 sind zwei der insgesamt 4 Druckkissen 6 erkennbar) genügend Platz zur Verfügung haben.

Im gezeigten Ausführungsbeispiel stützt sich die verfahrbare Platte 3 nur über die Eilhubvorrichtung 9 an der Basisplatte 2 bzw. dem Boden ab. Die Eilhubvorrichtung 9 kann in an sich bekannter Weise elektromechanisch oder hydraulisch ausgebildet sein und dient dazu, die verfahrbare Platte 3 bis zur Herstellung eines Formkontaktes auf die stationäre Basisplatte 2 hin zu verfahren bzw. diese von der stationären Basisplatte 2 wegzubewegen.

Für den Aufbau der Schließkraft sind die Druckkissen 6 vorgesehen, durch welche die Holme 4 unter Zugspannung setzbar sind. Die Druckkissen 6 können in an sich bekannter Weise ausgebildet sein. Die Schließkraft kann in ihnen hydraulisch, elektrohydraulisch, elektromechanisch und/oder elektromagnetisch erzeugt werden.

Die Druckkissen 6 sind an der Basisplatte 2 angeordnet. Die Verriegelungsvorrichtung 5 weist in an sich bekannter Weise vier je zwei Halbschalen aufweisende Hülsen 11 auf, wobei jeweils zwei der Hülsen 11 über Synchronisationsgestänge 12 in ihrer Bewegung miteinander synchronisiert sind.

Die Verriegelungseinrichtung 5 verriegelt die Holme 4 formschlüssig, spätestens sobald der Kontakt der Formhälften hergestellt ist und durch die Druckkissen 6 der Schließkraftaufbau erfolgen soll. Im Falle eines Prägevorganges kann das Verriegeln sogar vor Kontakt der Formhälften erfolgen.

Wie in Fig. 1 erkennbar ist, ist die Schließeinheit 1 selbst rahmenfrei ausgebildet.

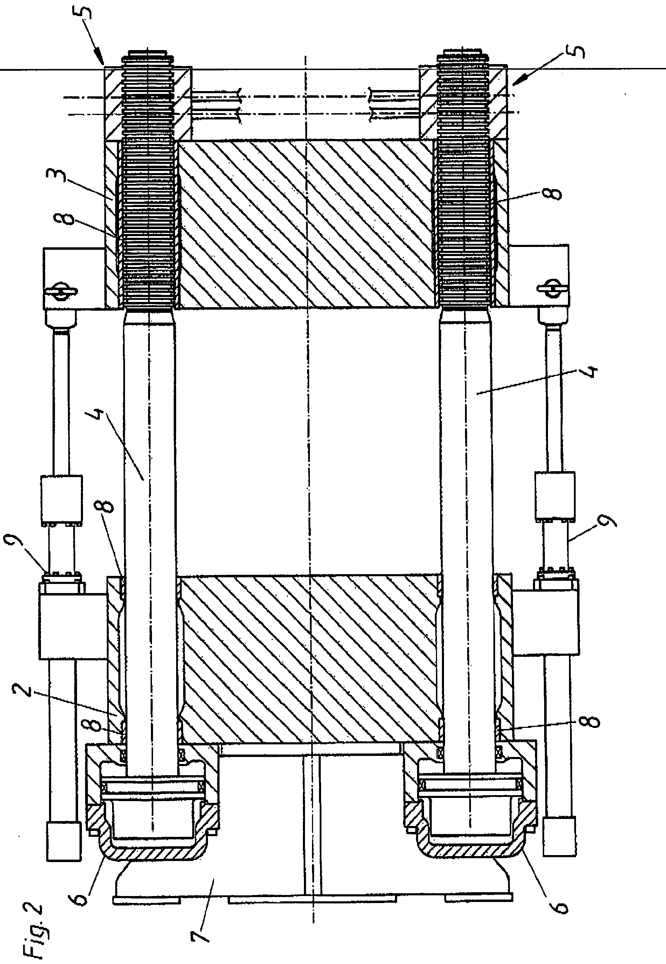

Fig. 2 zeigt eine Schnittdarstellung durch die Schließeinheit 1 der Fig. 1. Erkennbar ist, dass im gezeigten Fall die Druckkissen 6 hydraulisch ausgebildet sind (die entsprechenden Leitungen sind nicht dargestellt).

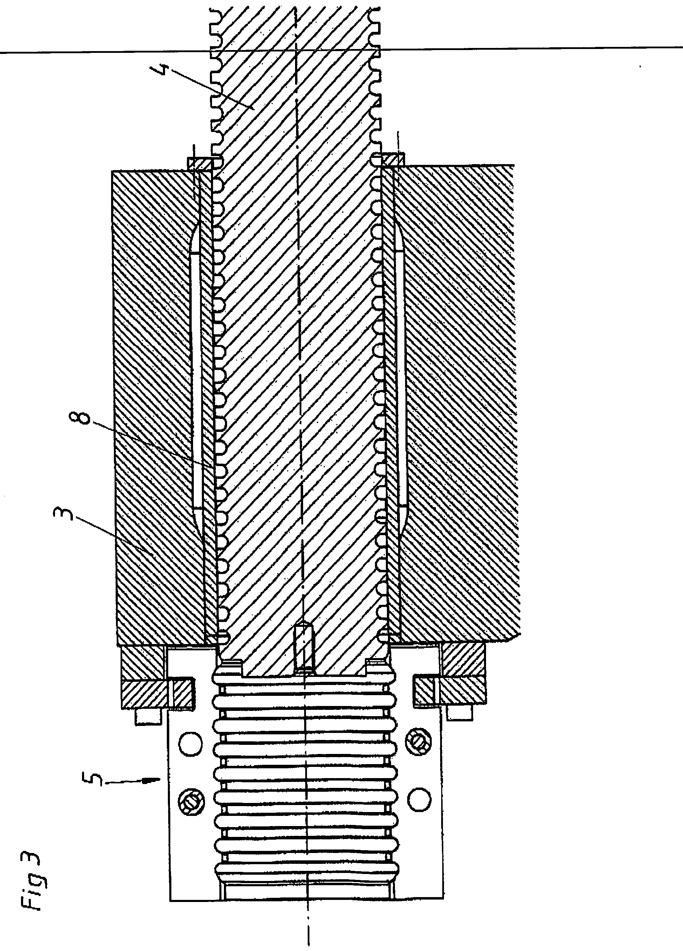

Von Bedeutung ist noch, dass die Fig. 2 sowie in größerem Detail die Figur 3 zeigen, wie die Holme 4 (von denen insgesamt vier vorgesehen sind) sowohl die verfahrbare Platte 3 als auch die stationäre Basisplatte 2 durchsetzen. Zum Führen der Holme 4 sind im gezeigten Ausführungsbeispiel Buchsen 8 in den Platten angeordnet. In der verfahrbaren Platte 3 ist dabei pro Holm 4 eine durchgehende Buchse 8 vorgesehen, während in der stationären Basisplatte 2 pro Holm 4 zwei Buchsen 8 vorgesehen sind. Anders als dargestellt können natürlich auch in der stationären Basisplatte 2 durchgehende Buchsen 8 verwendet werden.

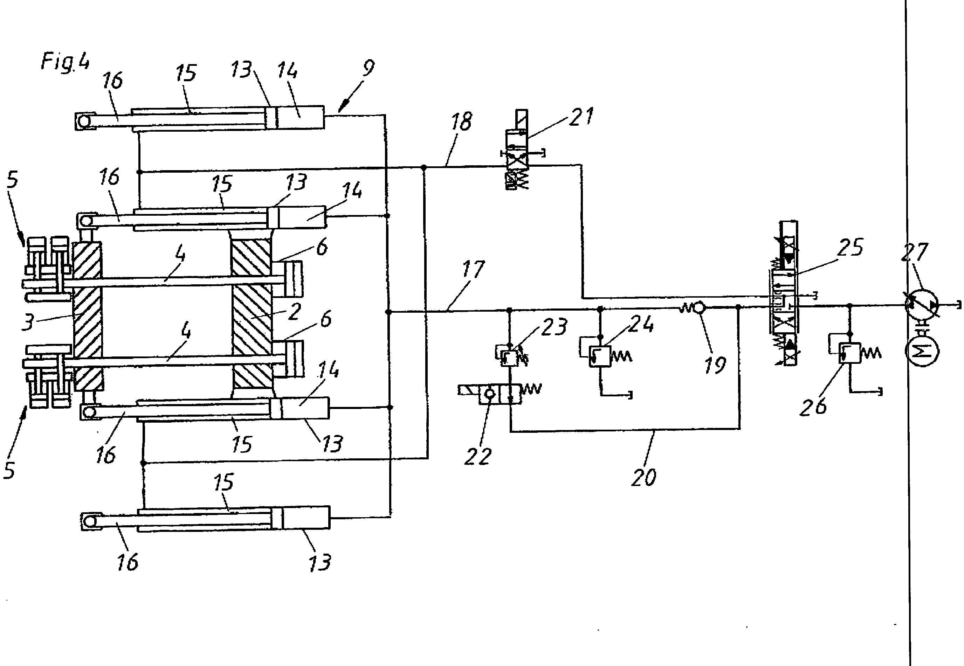

Die Fig. 4 zeigt die hydraulische Verschaltung einer hier hydraulisch ausgebildeten Eilhubvorrichtung 9, welche im gezeigten Ausführungsbeispiel vier Zylinder 13 aufweist, in welchen jeweils eine Kolbenstange 16 bewegbar gelagert ist. Jeder der Kolbenstangen 16 ist im gezeigten Ausführungsbeispiel mit der verfahrbaren Platte 3 verbunden. Jeder der Zylinder 13 ist im gezeigten Ausführungsbeispiel mit der stationären Basisplatte 2 verbunden. Dies könnte natürlich auch umgekehrt ausgebildet sein.

Erkennbar ist in Fig. 4 auch noch ein hydraulisch ausgebildete Verriegelungsvorrichtung 5, die allerdings, da sie an sich bekannt ist, nicht im Detail dargestellt ist.

Zur Verschaltung der Eilhubvorrichtung 9:
Die stangenseitigen Kammern 15 der Zylinder 13 sind durch eine Sammelleitung 18 miteinander verschaltet. Die kolbenseitigen Kammern 14 der Zylinder 13 sind durch eine Sammelleitung 17 miteinander verschaltet. Durch das Einpumpen bzw. Ablassen von Hydraulikflüssigkeit (meist Öl) in die jeweiligen Kammern 14, 15 kommt es zu einer entsprechenden Bewegung der mit Kolben versehenen Kolbenstangen 16 und damit der verfahrbaren Platte 3.

Der Antrieb erfolgt dabei über eine motorisch angetriebene Hydraulikpumpe 27.

Durch die hydraulische Schaltung ist eine gegebenenfalls schaltbare Gewichtskompensationsvorrichtung für die verfahrbare Platte 3 ausgebildet. Durch diese kann das Gewicht der verfahrenbaren Platte 3 kompensiert werden, sodass nur die Trägheit der verfahrbaren Platte 3 zum Bewegen derselben überwunden werden muss.

Um ein Leeren der kolbenseitigen Kammern 14 zu vermeiden, ist in der Sammelleitung 17 ein Rückschlagventil 19 angeordnet. Der Druck, welcher in der Sammelleitung 17 und damit in den kolbenseitigen Kammern 14 herrscht, lässt sich über das Druckbegrenzungsventil 23 einstellen. Durch den Steuerschieber 22 kann das Druckbegrenzungsventil 23 selektiv weggeschalten werden und der Pumpendruck der Hydraulikpumpe 27 wirkt direkt auf die Sammelleitung 17.

Mit dem Druckbegrenzungsventil 26 wird der Hydraulikkreislauf abgesichert. Das Proportionalventil 25 dient dem Steuern des Schließens und Öffnens der Zylinder 13 der Eilhubvorrichtung 9. Es ist ein weiteres Absicherungsventil 24 vorgesehen, welches zwischen den kolbenseitigen Kammern 14 und dem Druckbegrenzungsventil 19 in die Leitung 17 geschaltet ist.

In der Sammelleitung 18 der stangenseitigen Kammern 15 ist ein endlagengesicherter Schieber 21 vorgesehen, welcher dazu dient, den Schließvorgang zu sichern.

Die eingangs angesprochene Gewichtskompensation des Gewichts der verfahrbaren Platte 3 ergibt sich aus der Leitung 20 und den hydraulischen Elementen 19, 22 und 23. Zum Wegschalten der Gewichtskompensation müsste in der Leitung 17 zwischen den kolbenseitigen Kammern 14 und dem Rückschlagventil 19 ein Steuerschieber eingebaut werden, welcher die kolbenseitigen Kammern 14 auf Tank entlastet.

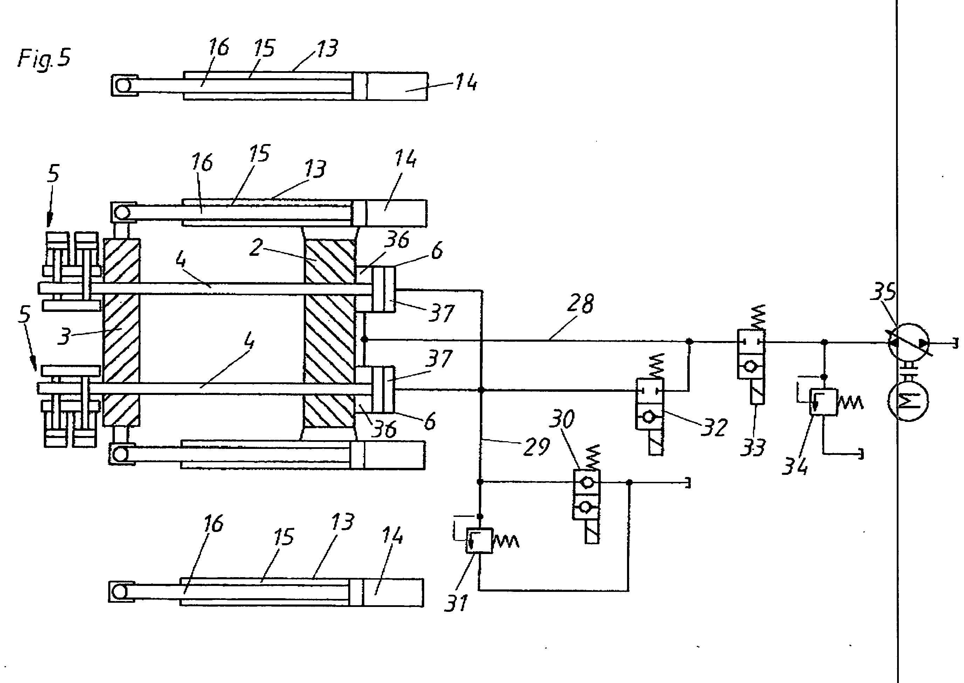

Zur Fig. 5:
Die Fig. 5 zeigt die hydraulische Verschaltung der Druckkissen 6, von welchen in Fig. 5 nur zwei von insgesamt vier dargestellt sind.

Erkennbar sind die Sammelleitung 28 für die holmseitigen Kammern 36 und die Sammelleitung 29 für die kolbenseitigen Kammern 37.

In Fig. 5 ist wie in Fig. 4 ein Druckbegrenzungsventil 34 zur Absicherung der Hydraulik vorgesehen. Auch kolbenseitig ist ein Druckbegrenzungsventil 31 zur Absicherung des Kreislaufs vorgesehen. Zum Aufbauen der Schließkraft wird das Steuerventil 33 geschaltet, sodass über die motorisch angetriebene Hydraulikpumpe 35 Hydrauliköl über die Leitung 28 in die holmseitigen Kammern 36 der Druckkissen 6 gepumpt werden kann. Aus den kolbenseitigen Kammern 37 der Druckkissen 6 fließt das Hydrauliköl über die Leitung 29 und den Steuerschieber 30 in den Tank. Der Steuerschieber 30 ist dabei in diesem Ausführungsbeispiel über eine 3 bar starke Feder vorgespannt. Zum Öffnen der nicht dargestellten Form sind die Schieber 32 und 33 sowie die Hydraulikpumpe 35 aktiv, wie dies an sich bekannt ist.

Als Antriebsquelle ist eine motorisch angetriebene Hydraulikpumpe 35 vorgesehen, wobei angemerkt werden muss, dass natürlich die Hydraulikschemata der Fig. 4 und 5 bei ein und derselben Maschine verwirklicht sein können. In diesem Fall kann auch ein und dieselbe motorisch angetriebene Hydraulikpumpe 27, 35 vorgesehen sein.

In Fig. 5 ist durch den Steuerschieber 30 eine Hochhalteeinrichtung für die Holme 4 realisiert, nämlich durch das in der gezeigten Stellung aktive Rückschlagventil, welches durch eine Feder auf 3 bar vorgespannt ist. Dieses muss durch Gewichtsbeaufschlagung (der Holme 4, der verfahrbaren Platte 3, der Formhälfte usw.) überwunden werden, damit sich die Holme 4 in Bewegung setzen können.

## Patentansprüche

1. Vertikale Zwei-Platten-Schließeinheit (1) für eine Spritzgießmaschine, mit
• einer stationären Basisplatte (2), welche auf einem Sockel (7) angeordnet ist,
• einer in vertikaler Richtung relativ zur Basisplatte (2) verfahrbaren Platte (3),
• Holmen (4), welche die Basisplatte (2) und die verfahrbare Platte (3) durchsetzen und sowohl in der Basisplatte (2) als auch in der verfahrbaren Platte (3) geführt und relativ zu diesen bewegbar sind,
• in der Basisplatte (2) und/oder der verfahrbaren Platte (3) zur Führung der Holme (4) angeordneten Buchsen (8),
• an der Basisplatte (2) angeordneten Druckkissen (6), durch welche die Holme (4) zum Aufbau einer Schließkraft unter Zugspannung setzbar sind,
• eine an der verfahrbaren Platte (3) angeordnete Verriegelungsvorrichtung (5), durch welche die Holme (4) relativ zur verfahrbaren Platte (3) verriegelbar sind,
wobei zum Verfahren der verfahrbaren Platte (3) in vertikaler Richtung eine - vorzugsweise elektromechanische oder hydraulische - Eilhubvorrichtung (9) vorgesehen ist, durch welche die verfahrbare Platte (3) bis zur Herstellung eines Formkontaktes auf die Basisplatte (2) hin verfahrbar ist oder von dieser wegbewegbar ist, wobei die Schließeinheit (1) rahmenfrei ausgebildet ist und sich die verfahrbare Platte (3) abgesehen von dem durch die Verriegelungsvorrichtung (5) verriegelten Zustand und dem Formkontakt nur über die Eilhubvorrichtung (9) an der Basisplatte (2) oder dem Boden abstützt,
wobei in der stationären Basisplatte (2) pro Holm (4) eine durchgehende Buchse (8) vorgesehen ist oder zwei Buchsen (8) vorgesehen sind, **dadurch gekennzeichnet, dass** in der verfahrbaren Platte (3) pro Holm (4) eine durchgehende Buchse (8) vorgesehen ist.

2. Schließeinheit nach Anspruch 1, wobei die Verriegelungseinrichtung (5) die Holme (4) formschlüssig verriegelt.

3. Schließeinheit nach einem der Ansprüche 1 oder 2, wobei die Basisplatte (2) als Formträger für eine Formhälfte ausgebildet ist.

4. Schließeinheit nach einem der Ansprüche 1 bis 3, wobei die Verriegelungsvorrichtung (5) als elektrische, elektromagnetische oder hydraulische Verriegelungsvorrichtung (5) ausgebildet ist.

5. Schließeinheit nach einem der Ansprüche 1 bis 4, **dadurch gekennzeichnet, dass** eine - vorzugsweise schaltbare - Gewichtskompensationsvorrichtung für die verfahrbare Platte (3) vorgesehen ist.

6. Schließeinheit nach einem der Ansprüche 1 bis 5, wobei eine Holmhochhalteeinrichtung vorgesehen ist.

7. Schließeinheit nach einem der Ansprüche 1 bis 6, wobei die Schließkraft in den Druckkissen (6) hydraulisch, elektrohydraulisch, elektromechanisch und/oder elektromagnetisch erzeugbar ist.

8. Spritzgießmaschine mit:
• wenigstens einer Plastifiziereinheit für Kunststoff,
• wenigstens einer Einspritzeinheit (10) zum Einspritzen von plastifiziertem Kunststoff in eine Form,
• wenigstens einer vertikalen Zwei-Platten-Schließeinheit (1) nach einem der Ansprüche 1 bis 7.

## Claims

1. A vertical two-platen clamping unit (1) for an injection moulding machine, with:
• a stationary base platen (2) which is disposed on a plinth (7),
• a platen (3) which can be displaced in the vertical direction relative to the base platen (2),
• struts (4) which pass through the base platen (2) and the displaceable platen (3) and which are guided in both the base platen (2) and also in the displaceable platen (3) and which are movable relative thereto,
• bushes (8) disposed in the base platen (2) and/or the displaceable platen (3) in order to guide the struts (4),
• pressure pads (6) disposed on the base platen (2), by means of which pressure pads the struts (4) can be placed under tension in order to build up a closing force,
• a locking device (5) which is disposed on the displaceable platen (3), by means of which the struts (4) can be locked relative to the displaceable platen (3),
wherein, in order to displace the displaceable platen (3) in the vertical direction, a quick lift device (9) is provided - which is preferably electromechanical or hydraulic - by means of which the displaceable platen (3) can be displaced until contact of the mould onto the base platen (2) occurs or can be moved away therefrom, wherein the clamping unit (1) is frameless in configuration and, apart from the situation when it is locked by means of the locking device (5) and when it is in contact with the mould, the displaceable platen (3) is only supported on the base platen (2) or the base via the quick lift device (9), wherein in the stationary base platen (2), one through bush (8) is provided per strut (4) or two bushes (8) are provided, **characterized in that** one through bush (8) is provided per strut (4) in the displaceable platen (3).

2. The clamping unit according to claim 1, wherein the locking device (5) locks the struts (4) by mechanical engagement.

3. The clamping unit according to claim 1 or claim 2, wherein the base platen (2) is configured as a mould carrier for a half-mould.

4. The clamping unit according to one of claims 1 to 3, wherein the locking device (5) is configured as an electrical, electromagnetic or hydraulic locking device (5).

5. The clamping unit according to one of claims 1 to 4, **characterized in that** a weight compensation device - which is preferably selectable - is provided for the displaceable platen (3).

6. The clamping unit according to one of claims 1 to 5, wherein a strut lifting device is provided.

7. The clamping unit according to one of claims 1 to 6, wherein the closing force in the pressure pads (6) can be produced hydraulically, electrohydraulically, electromechanically and/or electromagnetically.

8. An injection moulding machine having:
• at least one plasticizing unit for plastic;
• at least one injection unit (10) for injecting plasticized plastic into a mould,
• at least one vertical two-platen clamping unit (1) according to one of claims 1 to 7.

## Revendications

1. Unité de fermeture verticale à deux plateaux (1) pour une machine de moulage par pulvérisation, avec
- un plateau de base stationnaire (2), lequel est disposé sur un socle (7),
- un plateau pouvant être déplacé (3) dans une direction verticale par rapport au plateau de base (2),
- des montants (4), lesquels traversent le plateau de base (2) et le plateau pouvant être déplacé (3) et sont guidés à la fois dans le plateau de base (2) et dans le plateau pouvant être déplacé (3) et peuvent être déplacés par rapport à ceux-ci,
- des douilles (8) disposées dans le plateau de base (2) et/ou dans le plateau pouvant être déplacé (3) pour guider les montants (4),
- des coussins de pression (6) disposés sur le plateau de base (2), par lesquels les montants (4) peuvent être mis sous tension de traction pour créer une force de fermeture,
- un dispositif de verrouillage (5) disposé sur le plateau pouvant être déplacé (3), par lequel les montants (4) peuvent être verrouillés par rapport au plateau pouvant être déplacé (3),
dans laquelle est prévu, pour déplacer le plateau pouvant être déplacé (3) dans la direction verticale, un dispositif de course rapide (9) - de préférence électromécanique ou hydraulique - par lequel le plateau pouvant être déplacé (3) peut être déplacé en direction du plateau de base (2) jusqu'à l'établissement d'un contact avec le moule ou peut en être éloigné, dans laquelle l'unité de fermeture (1) est réalisée sans cadre et le plateau pouvant être déplacé (3) prend appui, abstraction faite de l'état verrouillé par le dispositif de verrouillage (5) et du contact avec le moule, seulement par l'intermédiaire du dispositif de course rapide (9) sur le plateau de base (2) ou le fond,
dans laquelle
une douille traversante (8) est prévue ou deux douilles (8) sont prévues par montant (4) dans le plateau de base stationnaire (2), **caractérisée en ce qu'**une douille traversante (8) est prévue par montant (4) dans le plateau pouvant être déplacé (3).

2. Unité de fermeture selon la revendication 1, dans laquelle le dispositif de verrouillage (5) verrouille par complémentarité de forme les montants (4).

3. Unité de fermeture selon l'une quelconque des revendications 1 ou 2, dans laquelle le plateau de base (2) est réalisé en tant que support de moule pour une moitié de moule.

4. Unité de fermeture selon l'une quelconque des revendications 1 à 3, dans laquelle le dispositif de verrouillage (5) est réalisé en tant qu'un dispositif de verrouillage (5) électrique, électromagnétique ou hydraulique.

5. Unité de fermeture selon l'une quelconque des revendications 1 à 4, **caractérisée en ce qu'**un dispositif de compensation de poids - de préférence commutable - est prévu pour le plateau pouvant être déplacé (3).

6. Unité de fermeture selon l'une quelconque des revendications 1 à 5, dans laquelle un système de retenue en hauteur de montant est prévu.

7. Unité de fermeture selon l'une quelconque des revendications 1 à 6, dans laquelle la force de fermeture peut être produite dans le coussin de pression (6) de manière hydraulique, électrohydraulique, électromécanique et/ou électromagnétique.

8. Machine de moulage par injection avec :
- au moins une unité de plastification pour de la matière plastique,
- au moins une unité d'injection (10) pour injecter de la matière plastique plastifiée dans un moule,
- au moins une unité de fermeture verticale à deux plateaux (1) selon l'une quelconque des revendications 1 à 7.
